# EUROPEAN PATENT APPLICATION

(11) **EP 2 312 760 A2**
(43) Date of publication of application: **20.04.2011**
(21) Application number: 09800588.7
(22) Date of filing: 24.07.2009
(51) Int. Cl.: H04B 1/38

(54) **PORTABLE DISPLAY DEVICE**

(30) Priority: 24.07.2008 KR 20080072401
(71) Applicant: Ryu, Sang-Kyu, Gyeonggi-do 437-727 (KR); Ryu, Won-Kyu, Gyeonggi-do 437-727 (KR); Ryu, Eun-Hee, Gyeonggi-do 465-032 (KR); Ryu, Jong-Kyu, Gyeonggi-do 431-060 (KR)
(72) Inventor: Ryu, Sang-Kyu, Gyeonggi-do 437-727 (KR); Ryu, Won-Kyu, Gyeonggi-do 437-727 (KR); Ryu, Eun-Hee, Gyeonggi-do 465-032 (KR); Ryu, Jong-Kyu, Gyeonggi-do 431-060 (KR)
(74) Representative: Pulieri, Gianluca Antonio
(86) International application number: PCT/KR2009/004138
(87) International publication number: WO 2010/011107

(57) **Abstract**

The present invention relates to a portable display device. The display device of the present invention comprises a main unit comprising a first display unit, a sliding second display unit joined to the first display unit, whose action allows display of a separate screen or an extension of the screen of the first display portion, and a sliding component formed between the main unit and the second display unit which enables the sliding of the second display portion against the main unit.

## Description

### Technical Field

The present invention relates to a portable display device, and in particular to a portable display device in which a display unit of a portable display device such as a mobile personal computer (MPC), a mobile internet device (MID), etc. is formed in a dual sliding structure.

### Background Art

In recent years, as a communication instrument technology advances, various kinds of portable display devices are disclosed. The portable display device is, for example, MPC, MID, etc. The portable display device is like a portable multimedia terminal which is equipped with various functions such as MP3, DMB, PDA, etc. as well as internet, navigation and portable multimedia playback functions which are generally performed under PC environment.

The portable display device is like a mobile computer device which can operate all kinds of functions which are generally performed by PC with Windows operating system, functioning like a small and light PC which provides various input options. The portable display device can operate in sync with a common PC, not a mobile PC, under a home or office environment, it has been used for the universal purposes because it can be used for music, movie, photo, office document, etc.

However, when doing internet for web surfing, e-mail, etc. or word work by using the portable display device such as MPC, MID, since the screen of the portable display device is too small to conveniently use. Namely, when it is equipped with a bigger screen for the above purposes, it is possible to express much video information, but many of the portable display device products have limited sizes like various function buttons (key pad) are installed around the display unit, which makes the size of the screen very limited.

### Disclosure of Invention

Accordingly, it is an object of the present invention to provide a portable display device which is actually equipped with two display units in such a manner that MPC, MID, etc. formed of one display unit is implemented in a dual sliding structure, while overcoming the problems encountered in the conventional art.

It is another object of the present invention to provide a portable display device in which a lower side of a screen of a display unit moved in a sliding method is aligned with an upper end portion of a screen of another display unit for thereby obtaining a stable support and position.

To achieve the above objects, there is provided a portable display device which comprises a main unit having a first display unit; a second display unit which is slide engaged to the main unit for forming a screen separately from the first display unit or extending the same screen; and a sliding component which is disposed between the main unit and the second display unit for a sliding movement of the second display unit with respect to the main unit.

The main unit is configured in such a manner that the first display unit is arranged between the operation parts arranged at both sides of the main unit, and the second display unit can slide over the first display unit.

The main unit is configured in such a manner that the first display unit is concaved from the main unit so that the upper surface of the second display unit and the upper surfaces of the operation parts are actually on the same plane.

In addition, there are further provided a guide rail disposed between the first display unit and the operation parts; and a guide shoulder which is disposed at the second display unit while being inserted in the guide rail and sliding.

There are further provided a guide groove formed at both side walls of a concaved portion formed at the center of the main unit; and a guide hook formed at both side surfaces of the second display unit for matching with the guide groove.

Meanwhile, an upper side of the screen formed at the first display unit is actually on the same line as the upper side of the main unit, and a lower side of the screen formed at the second display unit is actually on the same line as the lower end of the second display unit, and when the second display unit is elongated in a direction to become far from the main unit, the lower side of the second display unit is actually on the same line as the upper side of the screen of the first display unit.

Either the first display unit or the second display unit operates like a touch pad.

The sliding component includes at least one sliding hole formed at the main unit; and at least one sliding rod of which one end is inserted into the sliding hole, and the other end is attached to the second display unit.

The sliding hole is formed at both inner sides of the main unit below the operation parts, and the sliding rod is installed at a side surface of the second display unit.

Preferably, there is further provided an antenna of which one end is installed at the main unit, and the other end is installed at the sliding rod, and the antenna elongates or contracts when the second display unit slides with respect to the main unit.

Another sliding component includes at least one sliding slot formed at the main unit positioned below the first display unit; and a sliding plate of which one end is inserted into the sliding slot, and the other end is attached to a front side of the second display unit.

There is further provided an antenna of which one end is installed at the main unit, and the other end is installed at the sliding pad, and the antenna elongates or contracts when the second display unit slides with respect to the main unit.

The portable display device is either a mobile personal computer (MPC) or a mobile internet device (MID).

To achieve the above objects, there is provided a portable display device which comprises a main unit having operation parts; a display unit which is slide engaged to the main unit; and a sliding component which is disposed between the main unit and the display unit for a sliding movement of the display unit with respect to the main unit, wherein when the display unit slides in a direction to be far from the main unit, the lower side of the display unit is actually on the same line as the upper side of the main unit.

Preferably, the sliding component includes at least one sliding hole formed at the main unit; and at least one sliding rod of which one end is inserted into the sliding hole, and the other end is attached to the display unit.

### Brief Description of the Drawings

The present invention will become better understood with reference to the accompanying drawings which are given only by way of illustration and thus are not limitative of the present invention, wherein;

Figure 1 is a perspective view illustrating a portable display device according to a first embodiment of the present invention;

Figure 2 is a side view illustrating a state that a portable display device of Figure 1 operates;

Figure 3 is a plane cross sectional view of a sliding component used in a portable display device of Figure 1;

Figure 4 is a side cross sectional view of a sliding component used in a portable display device of Figure 1;

Figure 5 is a bottom view of a portable display device according to a second embodiment of the present invention;

Figure 6 is a side view of a portable display device of Figure 5;

Figure 7 is a plane cross sectional view of a sliding component used in a portable display device of Figure 5;

Figure 8 is a plane cross sectional view of a state that an antenna is installed at a sliding component of a portable display device according to a third embodiment of the present invention;

Figure 9 is a perspective view of a portable display device according to a fourth embodiment of the present invention;

Figure 10 is a side view of a portable display device of Figure 9;

Figure 11 is a front view of a portable display device of Figure 9;

Figure 12 is a plane view of a portable display device according to a fifth embodiment of the present invention;

Figure 13 is a front view of a portable display device of Figure 12;

Figure 14 is a view of an example of a portable display device structure according to the present invention; and

Figure 15 is a view of a portable display device according to a sixth embodiment of the present invention.

### <Descriptions of major elements in the drawings>

100, 200, 300, 400, 500, 600: portable display device

110, 410, 510, 610: main unit

111, 411, 511: first display unit

121, 421, 521: second display unit

130, 230, 430, 630: sliding component

340: antenna

### Modes for carrying out the invention

The preferred embodiments of the present invention will be described with reference to the accompanying drawings. The terms or words used in the present specification and claims are not supposed to limit to simple meanings in dictionary, but are supposed to be interpreted to an extent that inventors choose them for the best descriptions in proper forms and to be interpreted with the best match with the technical concept of the present invention. The constructions disclosed in the present specification and drawing are just the most preferred embodiments of the present invention, not disclosing all of the technical concept of the present invention, so at the time when the present invention is filed, various equivalents and modifications are possible.

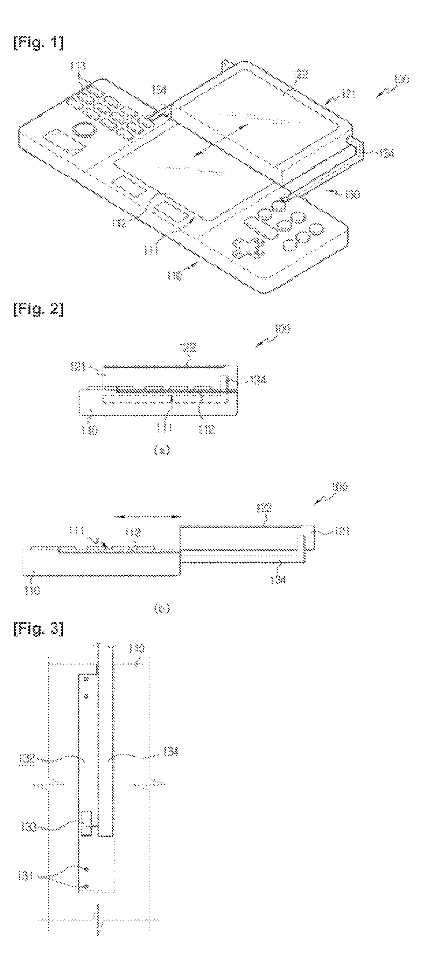

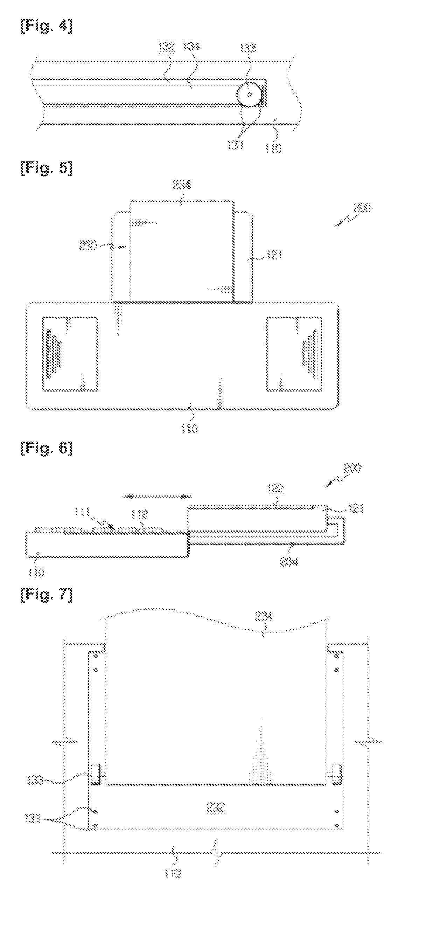

[Figure 1 is a perspective view illustrating a portable display device according to a first embodiment of the present invention, Figure 2 is a side view illustrating a state that a portable display device of Figure 1 operates, Figure 3 is a plane cross sectional view of a sliding component used in a portable display device of Figure 1, and Figure 4 is a side cross sectional view of a sliding component used in a portable display device of Figure 1.

As shown in Figures 1 to 4, the portable display device 100 comprises a main unit 110 having a first display unit 111, a second display unit 121 slide engaged to the main unit 110, and a sliding component 130 which is disposed between the main unit 110 and the second display unit 121 for a sliding movement of the second display unit 121 with respect to the main unit 110.

It is preferred that the portable display apparatus 100 is either MPC or MID, but for better understanding it is assumed that the portable display device 100 is MPC.

In the main unit 110, operation parts 113 are disposed at both sides, and the first display unit 111 is formed between the operation parts 113. The first display unit 111 is a device for displaying videos. The operation parts 113 are for inputting data or operating instrument. The first display unit 111 and the operation part 113 operate the same functions as known display and key pad or key board. Known construction elements are mounted in the main unit 110. Since the MPC is a known art, the detailed descriptions of the same will be omitted.

The screen (hereinafter referred to first screen 112) formed in the first display unit 111 contacts with an upper end portion of the main unit 110 so that the lower side of the screen (hereinafter referred to second screen 122) formed at the second display unit 121 is aligned with the upper side of the first screen 112. Either the first screen 112 or the second screen 122 is designed to operate like a touch pad.

The second display unit 121 is slidable on an upper surface of the main unit 110 as shown in Figure 2a. It is preferred that the second display unit 121 can slide over the first display unit 111. The second display unit 121 is configured in the same method as a conventional slide type cellular phone. A second screen 122 is formed on an upper surface of the second display unit 121. The second screen 122 contacts with a lower end portion of the second display unit 121 so that the second display unit 121 slides, and the lower side of the second screen 122 can align with the upper side of the first screen 112 as shown in Figure 2b, so it is possible to display one image on the first and second screens 112 and 122. It is possible to separately display images on the first and second screens 112 and 122. The second display unit 121 is configured to separately display an image different from the first display unit 111 or to enlarge the same image and to display thereon.

The first and second display units 111 and 121 are controlled from the main unit 110. The sliding second display unit 121 is connected with a flexible flat cable (FFC) (not shown) for thereby receiving a power and data. The FFC moves when the second display unit 121 slides and is installed at a sliding rod 134, which will be descried later, or can be directly connected being exposed to the outside.

As shown in Figures 1 and 2, the portable display device 100 comprises a sliding component 130 for supporting and sliding the second display unit 121 so that the lower side of the second screen 122 formed at the second display unit 121 can be positioned at the upper side of the first screen 112.

The sliding component 130 prevents the second display unit 121 from escaping from the main unit 110 when it slides and supports the same from an external impact. The sliding component 130 comprises at least one sliding hole 131 formed at the main unit 110, and at least one sliding rod 134 of which one end is inserted into the sliding hole 132 and the other end is attached to the second display unit 121.

The sliding hole 132 is formed at both inner sides of the main unit 110 in which the operation parts 113 are formed. At this time, the sliding rod 134 is inserted into the sliding hole 132 and comes out of the upper side of the main unit 110. A fixing protrusion 131 is formed at the front and rear sides of the sliding hole 132. Here, the front side means a direction that the sliding rod 134 comes out from the main unit 110, and the rear side means a direction that the sliding rod 134 is inserted into the main unit 110.

The fixing protrusion 131 is to fix one side of the sliding rod 134 which slides.

The sliding rod 134 is configured with its one end being connected with the second display unit 121, with one side being engaged to the fixing protrusion 131. In more details, the sliding rod 134 is made of a rigid material, with the other end being installed at a side portion of the second display unit 121. The sliding rod 134 has the curved other side because the second display unit 121 is positioned at a higher portion than the main unit 110.

In the present invention, the sliding rod 134 has been described as being installed at the side of the second display unit 121, but it is not limited thereto. It might be installed at a front side of the second display unit 121. At this time, it is not preferred that the sliding rod 134 is installed at a lower side of the second display unit 121 because when the sliding rod 134 is inserted into the main unit 110, it becomes interfered with the first display unit 111 formed at a center upper surface of the main unit 110.

The sliding rod 134 has a certain length by which one end of the same does not escape from the sliding hole 132. One side of the sliding rod 134 gets caught by means of the fixing protrusion 131, so the sliding rod 134 can escape only by a pressure exceeding a certain level. As shown in the drawings, a roller 133, which assists a movement, is installed at one side of the sliding rod 134 for helping the movement of the sliding rod 134. The roller 133 moves along the sliding hole 132 and gets caught between a pair of the fixing protrusions 131. Here, the fixing protrusion 131 formed at an outer side among the fixing protrusions 131 formed at the front and rear sides of the sliding hole 132 so that the sliding rod 134 cannot move further from a certain position.

In the present invention, it has been described that the roller 133 is provided at one side of the sliding rod 134 for easier movement and is installed at the fixing protrusion 131, but the above disclosed construction is not limited thereto. Any structure that enables the sliding rod 134 not to escape from the sliding hole 132 or to be installed at the fixing protrusion 131 of a set interval can be possible.

A cover (not shown) can be separately installed for preventing a foreign substance from inputting into the sliding hole 132.

Figure 5 is a bottom view of a portable display device according to a second embodiment of the present invention, Figure 6 is a side view of a portable display device of Figure 5, and Figure 7 is a plane cross sectional view of a sliding component used in a portable display device of Figure 5.

As shown in Figures 5 to 7, the portable display device 200 comprises a main unit 110 having a first display unit 111, a second display unit 121 slide engaged to the main unit 110, and a sliding component 230 which is disposed between the main unit 110 and the second display unit 121 for a sliding movement of the second display unit 121 with respect to the main unit 110. At this time, the main unit 110 of the portable display device 200 and the second display unit 121 according to a second embodiment of the present invention are same as the main unit 110 and the second display unit 121 according to a first embodiment of the present invention. Namely, the portable display device 200 operates with the same functions as the portable display device 100 of Figures 1 to 4, provided that the structure of the sliding component 230 is different from that of the first embodiment.

According to the second embodiment of the present invention, the sliding component 230 comprises a sliding slot 232 formed in the interior of the main unit 110, and at least one sliding plate 234 of which one end is inserted into the sliding slot 232, and other end is attached to the second display unit 121.

The sliding slot 232 has a certain width at the inner side of the main unit positioned at a lower side of the first display unit 111, and the sliding slot 232 is formed below the first screen 112 because the sliding plate 234 is inserted and escapes from the front side of the main unit 110. A fixing protrusion 231 is provided at the front side and the rear side of the sliding slot 232, respectively. Here, the front side means a direction that the sliding plate 234 escapes from the main unit 110, and the read side means that the sliding plate 234 is inserted into the main unit 110.

The fixing protrusion 231 is provided to fix one side of the sliding plate 234 which slides.

The sliding plate 234 has a wide area corresponding to the sliding slot 232, of which the other end is connected with the second display unit 121, and one side is engaged to the fixing protrusion 231. In more details, the sliding plate is made of a rigid material, of which the other end portion is installed at a front side of the second display unit 121. The sliding plate 234 is configured in such a manner that the other side of the same is curved because the second display unit 121 is positioned higher than the main unit 110. At this time, the other end of the sliding plate 234 is installed at a front side of the second display unit 121, so it is not interfered with the first display unit 111 even when the second display unit 121 moves in a direction to be overlapped.

A roller 233, which assists movement, is installed at both sides of one side of the sliding plate 234 and is engaged to the fixing protrusion 231. Since the roller 233 is the same as the roller 133 of the first embodiment, the descriptions of the same will be omitted.

The sliding slot 232 has a certain width, and the sliding plate 234 inserted into the sliding slot 232 has a certain area corresponding to the sliding slot 232. Like the sliding component 130 of the first embodiment of the present invention, a pair of sliding holes or more sliding holes might be formed, and sliding rods corresponding to the sliding holes might be installed.

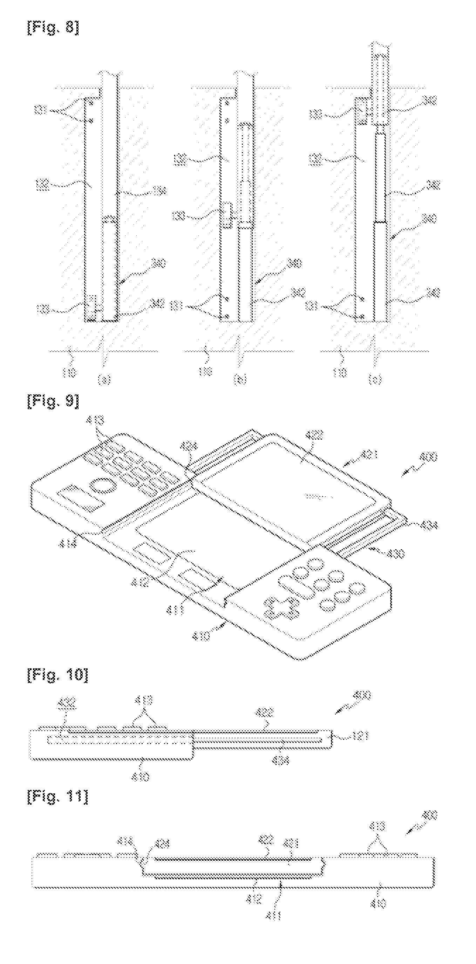

Figure 8 is a plane cross sectional view illustrating a state that an antenna is installed at the sliding component of the portable display device according to a third embodiment of the present invention. As shown therein, the portable display device according to a third embodiment of the present invention is made of the same elements as the portable display device 100 of the first embodiment of the present invention. Namely, an antenna 340 is further installed at the inner side of the sliding rod 134 of the sliding component 130. The operation of the antenna 340 installed at the sliding component 130 will be described.

Figure 8a shows a state that the antenna 340 is positioned at an inner side of the sliding rod 134 and is shortened. The antenna 340 is formed of a plurality of cylinders 342 having different diameters from one another, so it is extendable. Since the structure of the antenna 340 is well known, the descriptions of the same will be omitted.

One end of the antenna 340 is installed at the main unit 110, and the other end of the same is installed at the slide rod 134. The other side of the antenna 340, namely, the cylinder positioned at the top among the cylinders 342 formed of a plurality of the cylinders 342 is fixed at the inner side of the sliding rod 134. At this time, the sliding rod 134 is hollow in the longitudinal direction. One end of the antenna 340, namely, the cylinder positioned at the lowest portion among a plurality of the cylinders 342 is fixed at the inner side of the main unit 110. Preferably, one end of the antenna 340 is fixed at a lower surface of the sliding hole 132 into which the sliding rod 134 is inserted.

Next, when the second display unit (not shown) having a sliding rod 134 slides, the other end of the antenna 340 installed at the sliding rod 134 moves along with the same as shown in Figure 8b.

When the second display unit reaches the sliding position, the antenna 340 is elongated up to its full length as shown in Figure 8c. Namely, one end of the antenna 340 is fixed at a lower surface of the sliding hole 132, so the other end of the antenna 340 is elongated together with the movement of the sliding rod 134.

The antenna 340 is to perform a communication for internet or DMB which is the features of the portable display device and might be provided in a built-in type in the interior of the main unit 110. Since the other end of the antenna 340 is installed at the sliding rod 134, the support force of the sliding rod 134 supporting the second display device can be enhanced.

It has been described that the antenna 340 is installed at the inner side of the sliding rod 134 of the sliding component 130 in the same structure as the portable display device 100 according to the first embodiment of the present invention, it is not limited thereto. It is obvious that the antenna might be installed at the sliding plate 234 of the portable display device 200.

In the present invention, it has been described that the sliding component operates by a manual method, the slide rod 134 of the sliding component or the slide plate 234 can be operated by a hydraulic method. A hydraulic cylinder might be installed instead of the antenna of Figure 8. When the slide rod or the slide plate is designed to operate with the aid of the hydraulic cylinder, it is obvious to a person skilled in the art, so the descriptions of the same will be omitted.

Figure 9 is a perspective view of a portable display device according to a fourth embodiment of the present invention, Figure 10 is a side view of a portable display device of Figure 9 and Figure 11 is a front view of a portable display device of Figure 9.

As shown in Figures 9 to 11, the portable display device 400 comprises a main unit 410 which has a side wall formed as the center upper surface at which the display unit 411 is formed is concaved and an operation key 413 provided at both sides, a second display unit 421 which is installed between the side walls of the main unit 410 and slides, and a sliding component 430 which prevents the second display unit 421 from escaping from the main unit 410 when it slides. At this time, the main unit 410, the second display unit 421 and the sliding component 430 of the portable display device 400 according to the fourth embodiment of the present invention actually operate in the same manner as the main unit 110, the second display unit 121 and the sliding component 130 of the first embodiment of the present invention as shown Figs. 1 to 4.

According to the fourth embodiment of the present invention, the main unit 410 is formed with its center portion being concaved, and both sides being protruded. A guide groove 414 is formed at a side wall formed as the center of the main unit 410 is concaved. The guide groove 414 enables the second display unit 421 to easily slide.

The second display unit 421 is positioned between the side walls, and a guide hook 424 matching with the guide grove 414 is formed at both sides of the second display unit 421. The guide hook 424 is inserted into the guide groove 414, so the second display unit 421 can easily slide along the guide groove 414.

The second display unit 421 is installed at the side wall with the lower surface of the second display unit 421 being spaced apart by a certain interval from the center upper surface of the main unit 410 at which the first display unit 411 is installed. So, it is possible to prevent the second display unit 421 from colliding with the first display unit 411 by means of an external impact, which leads to preventing damages of the first display unit 411.

The sliding component 430 includes a sliding hole 432 formed at the inner side of the main unit 410, and a sliding rod 434 of which one end is inserted into the sliding hole 432, and the other end is attached to the second display unit 421. The sliding component 430 is made in the same structure as the sliding component 130 of the first embodiment of the present invention, provided that the upper surfaces of both sides of the main unit 410 having the operation parts 413 have the heights corresponding to the height of the upper surface of the second display unit 421, so it is possible to easily connect the sliding rod 434 to the second display unit 421.

As not shown in the drawings, the sliding hole 432 is formed at the main unit formed at a lower side of the first display unit 411, so the sliding rod 434 might be installed at a front side of the second display unit 421. The portable display device 400 might adapt the sliding component formed in the same structure as the sliding component 230 of the second embodiment of the present invention.

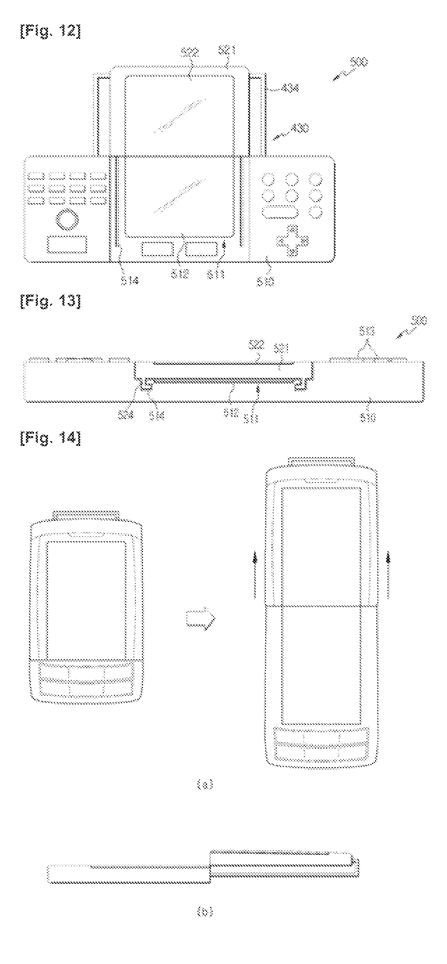

Figure 12 is a plane view of a portable display device according to a fifth embodiment of the present invention, and Figure 13 is a front view of a portable display device of Figure 12.

As shown in Figures 12 and 13, the portable display device 500 comprises a main unit 510 having a first display unit 511 and a side wall formed as the center upper surface is concaved, with operation parts 513 being provided at both sides of the same, a second display unit 521 which is mounted between the side walls of the main unit 510 and slides, and a sliding component 430 for supporting and preventing the second display unit 510 from escaping from the main unit 510 when it slides. At this time, the sliding component 430 of the portable display device 500 according to the fifth embodiment of the present invention means the same element as the sliding component 430 of the fourth embodiment of the present invention. Namely, as shown in Figures 9 to 11, the portable display device 500 actually operates in the same method as the portable display device 400, provided that the structure that the main unit 510 and the second display unit 521 are engaged is different from that of the fourth embodiment of the present invention.

According to the fifth embodiment of the present invention, the main unit 510 has a concaved center, with both sides being protruded. A guide rail 514 is formed at both sides of the first display unit 511 formed at the main unit 510, namely, between the first display unit 511 and the operation key 513. The guide rail 514 enables the second display unit 521 smoothly to slide.

The second display unit 521 is disposed between the side walls, and a guide shoulder 524 is formed at a lower surface of the second display unit 521 and slides being inserted in the guide rail 514. So, the second display unit 521 can easily slide along the guide rail 514.

The second display unit 521 is installed in such a manner that when being engaged to the guide rail 514, the lower surface of the second display unit 521 is spaced apart by a certain interval from the center upper surface of the main unit 510 at which the first display unit 511 is installed, so it is possible to prevent the first display unit 510 from being damaged when the second display unit 521 collides with the first display unit 511 by an external impact.

The portable display device according to the so-far described embodiments of the present invention is **characterized in that** the lower side of the second screen is stably supported so that it can be positioned at the upper side of the first screen, and the second display unit is formed in a sliding structure. It has been earlier described that the portable display device is one of MPC, MID, etc., but the present invention can be applied to a slide cellular phone by adapting the sliding component of the present invention and can be applied to various portable display devices such as PMP, DMB, PSP, etc.

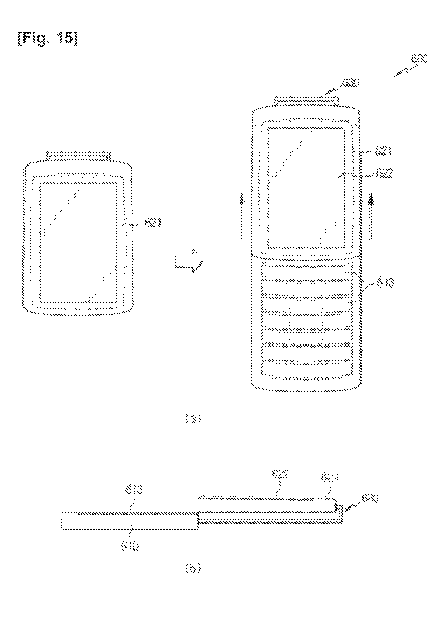

The cellular phone of Figure 14 adapts two display units. The sliding component of the present invention might be applied to the cellular phone having one display unit in the same structure as the conventional slide cellular phone. The detailed construction will be described with reference to Figure 15.

Figure 15 is a view of a portable display device according to a sixth embodiment of the present invention.

As shown therein, the portable display device 600 comprises a main unit 610 having operation parts 613, a display unit 621 which is slide engaged to the main unit 610, and a sliding component 630 disposed between the main unit 610 and the display unit 620 for a sliding movement of the display unit 621 with respect to the main unit 610. At this time, the sliding component 630 of the portable display device 600 has the same function and structure as the sliding component of the first embodiment or the second embodiment of the present invention, provided that the sliding component 630 is applied to the cellular phone formed of one display unit 621, which is different from the first embodiment of the present invention.

The portable display device 600 is a cellular phone and is **characterized in that** the lower side of the display unit 621 is actually on the same line as the upper side of the main unit 610 by using the sliding component 630.

The portable display device 600 formed in the above structure, namely, the cellular phone 600 is **characterized in that** the display unit is positioned at the upper side of the main unit, which is different from the conventional slide cellular phone, so it is possible to decrease the size of the cellular phone.

It has been earlier described that the portable display device of the first embodiment to the fifth embodiment is provided with two display units, but an operation part might be separately arranged instead of the first display unit formed at the main unit.

The cellular phone display devices of Figures 1 to 15 are shown having a little over estimated thicknesses in order to express each element more clearly for those skilled in the art to easily understand the present invention.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

### Industrial applicability

As described above the portable display device according to the present invention has the following effects.

First, MPC, MID, etc. are implemented in a dual slide type for thereby using two display units. Two display units can be applied with one screen or two split screens for thereby manufacturing a bigger screen as compared to the conventional art, which leads to convenient use.

Second, the lower side of the screen of the slid second display unit is stably positioned at the end portions of the upper sides of the screen of the first display unit at which the lower side of the screen of the second display unit is fixed, for thereby maximizing the applicable range of the screen.

Third, the present invention can be applied to PMP, PSP, DMB, etc. except for the conventional cellular phone which adapts a sliding method, by using the sliding component for sliding the second display unit.

Fourth, it is possible to maximize the space applications of the operation pats for operating the cellular phone and the display unit which displays images, by adapting the sliding component to the conventional cellular phone which is formed of one display unit. In addition, the present invention can be applied to PMP, PSP, DMB, etc., except for cellular phones while decreasing the sizes of the products.

## Claims

1. A portable display device, comprising:
a main unit having a first display unit;
a second display unit which is slide engaged to the main unit for forming a screen separately from the first display unit or extending the same screen; and
a sliding component which is disposed between the main unit and the second display unit for a sliding movement of the second display unit with respect to the main unit.

2. A portable display device according to claim 1, wherein said main unit is configured in such a manner that the first display unit is arranged between the operation parts arranged at both sides of the main unit, and said second display unit can slide over the first display unit.

3. A portable display device according to claim 2, wherein said main unit is configured in such a manner that the first display unit is concaved from the main unit so that the upper surface of the second display unit and the upper surfaces of the operation parts are actually on the same plane.

4. A portable display device according to claim 3, further comprising:
a guide rail disposed between the first display unit and the operation parts; and
a guide shoulder which is disposed at the second display unit while being inserted in the guide rail and sliding.

5. A portable display device according to claim 3, further comprising:
a guide groove formed at both side walls of a concaved portion formed at the center of the main unit; and
a guide hook formed at both side surfaces of the second display unit for matching with the guide groove.

6. A portable display device according to claim 1, wherein an upper side of the screen formed at the first display unit is actually on the same line as the upper side of the main unit, and a lower side of the screen formed at the second display unit is actually on the same line as the lower end of the second display unit, and when the second display unit is elongated in a direction to become far from the main unit, the lower side of the second display unit is actually on the same line as the upper side of the screen of the first display unit.

7. A portable display device according to claim 1, wherein either said first display unit or said second display unit operates like a touch pad.

8. A portable display device according to one claim among claim 1 through claim 7, wherein said sliding component includes:
at least one sliding hole formed at the main unit; and
at least one sliding rod of which one end is inserted into the sliding hole, and the other end is attached to the second display unit.

9. A portable display device according to claim 8, wherein said sliding hole is formed at both inner sides of the main unit below the operation parts, and said sliding rod is installed at a side surface of the second display unit.

10. A portable display device according to claim 8, further comprising:
an antenna of which one end is installed at the main unit, and the other end is installed at the sliding rod, and said antenna elongates or contracts when the second display unit slides with respect to the main unit.

11. A portable display device according to one claim among claims 1 through claim 7, wherein said sliding component includes:
at least one sliding slot formed at the main unit positioned below the first display unit; and
a sliding plate of which one end is inserted into the sliding slot, and the other end is attached to a front side of the second display unit.

12. A portable display device according to claim 11, further comprising:
an antenna of which one end is installed at the main unit, and the other end is installed at the sliding pad, and said antenna elongates or contracts when the second display unit slides with respect to the main unit.

13. A portable display device according to one claim among claims 1 through 7, wherein said portable display device is either a mobile personal computer (MPC) or a mobile internet device (MID).

14. A portable display device, comprising:
a main unit having operation parts;
a display unit which is slide engaged to the main unit; and
a sliding component which is disposed between the main unit and the display unit for a sliding movement of the display unit with respect to the main unit, wherein when the display unit slides in a direction to be far from the main unit, the lower side of the display unit is actually on the same line as the upper side of the main unit.

15. A portable display device according to claim 14, wherein said sliding component includes:
at least one sliding hole formed at the main unit; and
at least one sliding rod of which one end is inserted into the sliding hole, and the other end is attached to the display unit.
